Europäisches Patentamt

European Patent Office

Office européen des brevets

(19)

(11) Numéro de publication: **0 015 166**
**A1**

## (12) DEMANDE DE BREVET EUROPEEN

(21) Numero de dépôt: **80400022.2**

(22) Date de dépôt: **09.01.80**

(51) Int. Cl.³: **H 02 K 3/52**
**H 02 K 3/18**

(30) Priorité: **25.01.79 FR 7901871**

(43) Date de publication de la demande:
**03.09.80 Bulletin 80/18**

(84) Etats Contractants Désignés:
**DE GB IT SE**

(71) Demandeur: **DUCELLIER & Cie**
**Echat 950**
**F-94024 Creteil Cedex(FR)**

(72) Inventeur: **Bouclet, Rémy**
**76 rue Rothschild**
**F-62600 Berck Plage(FR)**

(74) Mandataire: **Habert, Roger**
**Echat 950**
**F-94024 Creteil Cedex(FR)**

(54) **Rotor pour machine électrique tournante.**

(57) Ce rotor concerne notamment un alternateur de véhicule automobile, qui comporte deux roues polaires à griffes (8 et 9), un noyau magnétique et un support de bobinage (1) maintenu autour du noyau entre les deux roues polaires et dans lequel sont réalisées une pluralité de perforations (7) qui servent de canaux au matériau isolant utilisé pour l'isolation des spires du bobinage (4) entr'elles, ledit matériau isolant pouvant alors s'accrocher par collage sur le noyau du rotor.

_FIG. 2 _

EP 0 015 166 A1

Croydon Printing Company Ltd.

## Rotor pour machine électrique tournante.

La présente invention concerne un rotor de machine électrique tournante notamment pour alternateur équipant un véhicule automobile.

Ce rotor est du type comportant deux roues polaires à griffes placées l'une en regard de l'autre, un noyau magnétique entourant une partie de l'arbre du rotor, et un support de bobinage disposé autour du noyau entre les deux roues polaires à griffes.

Ce support réalisé en matériau dur isolant se présente sous la forme d'un anneau cylindrique qui comporte à chacune de ses extrémités une joue radiale dirigée vers l'extérieur de l'anneau. L'ensemble des joues et de la face périphérique extérieure définit un logement dans lequel est bobiné le fil du bobinage de la machine électrique.

Dans les rotors d'alternateurs connus de tels supports sont assemblés avec les roues polaires comportant chacune un demi-noyau, le tout est ensuite plongé dans un bain d'isolant afin d'isoler notamment les spires du bobinage les unes par rapport aux autres, or dans une telle réalisation l'isolant pénètre difficilement jusqu'aux spires se trouvant au fond du logement du bobinage et il peut arriver que les spires insuffisamment maintenues entr'elles cassent.

De plus le support ne comportant pas de moyens d'accrochage sur les demi-noyaux il a tendance à glisser sur ces demi-noyaux ce qui peut aussi provoquer une rupture dans les spires du bobinage, annihilant alors le fonctionnement de la machine électrique.

La présente invention a pour but de remédier à de tels inconvénients et concerne à cet effet un rotor pour machine électrique tournante, notamment pour alternateur équipant un véhicule automobile, du type comportant deux roues polaires à griffes placées l'une en regard de l'autre, un noyau magnétique entourant une partie de l'arbre du rotor, et un support de bobinage, disposé autour du noyau entre les roues polaires à griffes, réalisé en matière isolante dure et se présentant sous la forme d'un anneau cylindrique qui comporte à chacune de ses extrémités une joue radiale dirigée vers l'extérieur de l'anneau de façon à définir un logement pour le bobinage dont les spires sont maintenues entr'elles par une matière isolante, rotor caractérisé en ce qu'au moins une des parois du support de bobinage comporte une pluralité de perforations ménagées de façon telle qu'elles jouent le rôle, lors de l'opération d'isolation, de canaux pour la pénétration de l'isolant, lequel s'accroche à la paroi sur laquelle est assemblé le support de bobinage et assure une solidarité effective par collage entre ladite paroi et le support de bobinage et conséquemment entre la paroi et ledit bobinage.

La description qui va suivre en regard des schémas annexé fera mieux comprendre comment l'invention peut être réalisée.

La figure 1 représente une vue en perspective d'un support de bobinage conforme à l'invention.

La figure 2 représente une section axiale d'un rotor d'alternateur pour véhicule automobile équipé d'un support de bobinage conforme à l'invention.

La figure 3 est une variante d'un support selon l'invention.

La figure 4 est une coupe d'une variante d'alternateur équipé d'un support selon l'invention.

De façon connue le support 1 de bobinage du fil conducteur électriquement 4 est constitué d'un anneau cylindrique 5 aux extrémités duquel sont réalisées deux joues 2 et 3 dirigées radialement vers l'extérieur de l'anneau 5.

Les joues 2 et 3 réalisent alors avec l'extérieur de l'anneau 5 un logement 6 dans lequel est bobiné le fil conducteur électriquement 4.

Conformément à l'invention l'anneau cylindrique 5 comporte sur toute sa périphérie une pluralité de perforations 7.

Ces perforations 7 jouent un rôle important lors de l'assemblage.

Nous allons, en premier lieu, considérer le cas de fil conducteur électriquement du type enrobé d'un isolant thermo-adhérant.

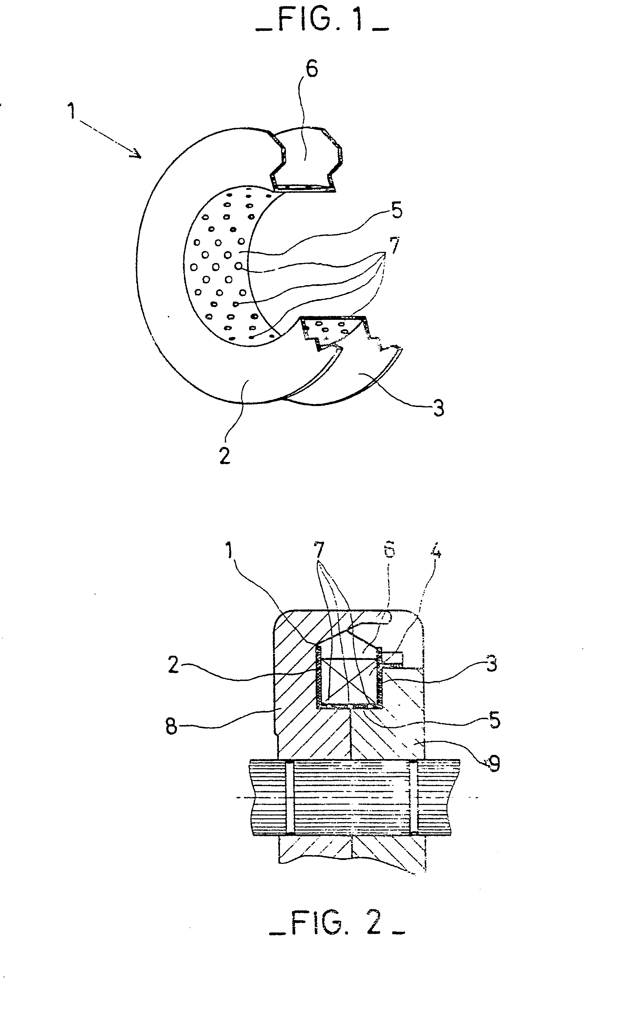

Les éléments constituant le rotor, tels que : les roues polaires 8 et 9, le support 1 dans lequel est bobiné le fil inducteur enrobé d'un isolant thermo-adhérant, étant assemblés selon la figure 2, cedit rotor est alors soumis à l'effet d'une étuve.

Dans cette étuve l'ensemble rotor est soumis à une température nécessaire et suffisante pour que d'une part aucun élément ne soit détérioré et d'autre part pour que l'isolant thermo-adhérant fonde en maintenant les spires les unes aux autres et s'écoule
dans les perforations 7 pour venir en contact contre les demi-noyaux solidaires de chaque roue polaire. L'isolant s'accroche alors
à la paroi métallique de ces demi-noyaux et assure une liaison
rigide entre les roues polaires et le support et conséquemment
entre les roues polaires et le bobinage lorsque le rotor est soumis à diverses vibrations.

Il est ainsi obtenu une solidarité effective entre les différents éléments constituant un tel rotor assurant ainsi un bon fonctionnement dudit rotor sans risque de rupture d'une quelconque
spire du bobinage.

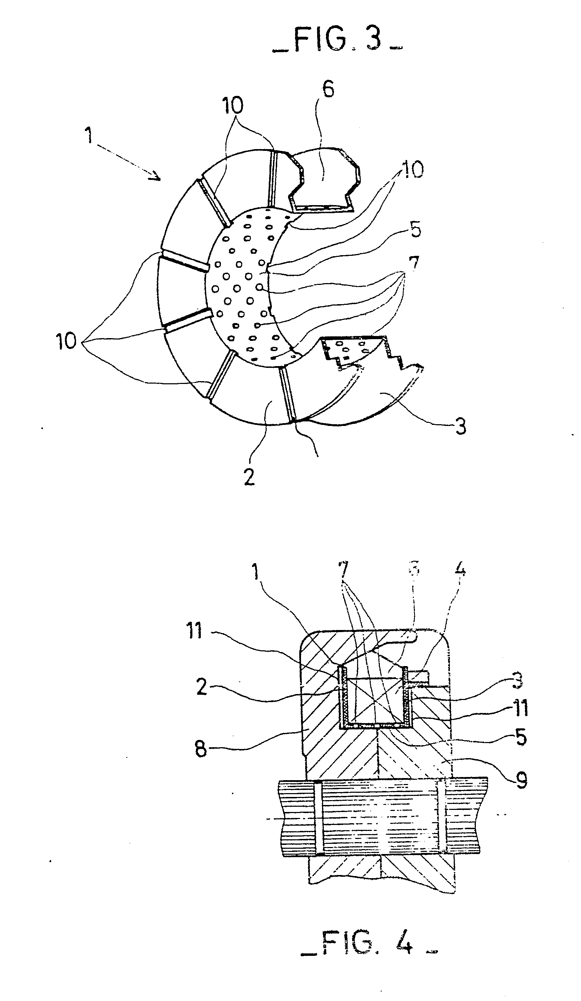

Dans le cas d'utilisation d'un fil conducteur électriquement
non enrobé d'un isolant thermo-adhérant, il est obtenu un même assemblage rigide en réalisant des rainures radiales soit sur l'extérieur des joues du support 1 (voir fig. 3), soit à l'intérieur des
roues polaires 8 et 9 (voir figure 4).

Les différents éléments étant assemblés le rotor est imprégné
sous vide, l'isolant s'infiltre alors jusqu'aux spires du fond du
logement 6 et à travers les perforations 7 par l'aspiration au niveau des rainures et des tolérances de fabrication.

Le support 1 est, dans ce cas aussi, bien maintenu solidaire
des roues polaires et toutes les spires du fil conducteur électriquement maintenues les unes entre les autres.

Il est bien évident que des modifications peuvent être apportées à une telle réalisation donnée à titre d'exemple sans sortir
pour cela du cadre de l'invention.

4                    0015166

R E V E N D I C A T I O N S

1.- Rotor pour machine électrique tournante, notamment pour alternateur équipant un véhicule automobile, du type comportant deux roues polaires à griffes placées l'une en regard de l'autre, un noyau magnétique entourant une partie de l'arbre du rotor, et un support de bobinage, disposé autour du noyau entre les roues polaires à griffes, réalisé en matière isolante dure et se présentant sous la forme d'un anneau cylindrique qui comporte à chacune de ses extrémités une joue radiale dirigée vers l'extérieur de l'anneau de façon à définir un logement pour le bobinage dont les spires sont maintenues entr'elles par une matière isolante, rotor caractérisé en ce qu'au moins une des parois (2, 3 ou 5) du support de bobinage (1) comporte une pluralité de perforations (7) ménagées de façon telle qu'elles jouent le rôle, lors de l'opération d'isolation, de canaux pour la pénétration de l'isolant, lequel s'accroche à la paroi sur laquelle est assemblé le support de bobinage et assure une solidarité effective par collage entre ladite paroi et le support de bobinage et conséquemment entre la paroi et ledit bobinage.

2.- Rotor selon la revendication 1, caractérisé en ce que les perforations (7) sont réalisées dans la partie annulaire (5) du support de bobinage lequel comporte aussi sur la face externe d'au moins une de ses joues (2 ou 3) des rainures (10) ménagées de façon telle à faciliter le passage de la matière isolante à travers les perforations lors d'une opération d'imprégnation de ladite matière isolante.

3.- Rotor selon la revendication 1, caractérisé en ce que les roues polaires à griffes (8-9) comportent, sur leur face vers laquelle sont dirigées les griffes, une pluralité de rainures (11) ménagées de façon telle qu'en coopération avec les perforations (7) du support du bobinage (1) elles facilitent le passage de la matière isolante à travers lesdites perforations (7) lors d'une opération d'imprégnation de ladite matière isolante.

0015166

_FIG. 1_

_FIG. 2_

_FIG. 3_

_FIG. 4_

0015166

Office européen des brevets

RAPPORT DE RECHERCHE EUROPEENNE

Numéro de la demande

EP 80 40 0022

## DOCUMENTS CONSIDERES COMME PERTINENTS

| Catégorie | Citation du document avec indication, en cas de besoin, des parties pertinentes | Revendication concernée |
|---|---|---|
| X | GB - A - 1 108 157 (BAKER A.D.)<br>* Page 1, colonne de gauche, ligne 42 à colonne de droite, ligne 51; page 2, colonne de gauche, lignes 25-29 et 1-20; page 1, colonne de gauche, lignes 33-42 * | 1,2,3 |
| | FR - A - 1 551 658 (NIPPON DENSO KABUSHIKI KAISHA)<br>* Page 2, colonne de gauche, lignes 7-13; page 2, colonne de gauche, lignes 44-52 * | 1,3 |
| | FR - A - 1 558 631 (LUCAS LTD.)<br>Page 2, lignes 41-45 * | 1 |
| | DE - B - 1 287 692 (SIEMENS AG.)<br>* Colonne 1, lignes 17-25, 35-49; colonne 2, lignes 40-56; figure 2 * | 2 |
| | DE - B - 1 112 578 (SIEMENS AG.)<br>* Colonne 2, lignes 28-33; colonne 2, ligne 50 à colonne 3, ligne 12 * | 2 |
| A | FR - A - 2 093 554 (GENERAL MOTORS)<br>* Page 5, lignes 15-24 * | |

**CLASSEMENT DE LA DEMANDE (Int. Cl. 3)**

H 02 K 3/52
3/18

**DOMAINES TECHNIQUES RECHERCHES (Int. Cl. 3)**

H 02 K 19/26
3/18
3/30
3/32
3/34
3/52
15/12
1/24
1/14
15/095

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche La Haye | Date d'achèvement de la recherche 19-05-1980 | Examinateur TANGOCCI |
|---|---|---|

OEB Form 1503.1 06.78